Europäisches Patentamt

(19) European Patent Office

Office européen des brevets

(11) EP 0 848 438 A1

(12) EUROPEAN PATENT APPLICATION

(43) Date of publication:
17.06.1998 Bulletin 1998/25

(51) Int. Cl.$^6$: H01M 4/52

(21) Application number: 97114699.8

(22) Date of filing: 25.08.1997

(84) Designated Contracting States:
AT BE CH DE DK ES FI FR GB GR IE IT LI LU MC NL PT SE
Designated Extension States:
AL LT LV RO SI

(30) Priority: 13.12.1996 KR 9665070
02.05.1997 KR 9717072

(71) Applicant:
SAMSUNG DISPLAY DEVICES CO., LTD.
Suwon-Si, Kyunggi-Do (KR)

(72) Inventors:
• Kim, Geon Bae
Suwon-si, Kyungki-do (KR)
• Lee, Sang Won
Suwon-si, Kyungki-do (KR)
• Park, Yong Chul
Suwon-si, Kyungki-do (KR)
• Kim, Sung Soo
Suwon-si, Kyungki-do (KR)

(74) Representative:
Modiano, Guido, Dr.-Ing. et al
Modiano, Josif, Pisanty & Staub,
Baaderstrasse 3
80469 München (DE)

(54) An active material for a cathode of a nickel cell and production method of a cathode thereof

(57) Disclosed in this invention is an active material for a cathode of a nickel cell having the formula, $Ni_{1-2x}M_{2x}(OH)_2(CO_3)_x$ ($0<x\leq0.1$), wherein said M is a trivalent metal, the average diameter of said active material is 2~30μm, half width of XRD peak in (001) plane thereof is more than 1.0°/2θ, tapping density thereof is more than 1.6g/cm$^3$, specific surface area thereof is 5~50m$^2$/g, and the shape thereof is globular.

FIG.1

**Description**

## BACKGROUND OF THE INVENTION

**(a) Field of the Invention**

The present invention relates to an active material for a cathode of a nickel cell and production method of a cathode thereof, and particularly, provides an active material for a cathode of a nickel cell and production method of a cathode thereof for making it possible to produce a cell having a high capacity.

**(b) Description of the Related arts**

Recently, downsizing and lightening of new portable electronic machines such as camera-VTR integrated systems, audio systems, lap-top personal computers, portable phones and the like has made it necessary to improve the efficiency and capacity of a cell. In particular, trying to lower the production cost proceeds now in economical aspects.

In general, cells are classified as primary or secondary depending on their capability of being electrically recharged. A primary cell, such as a manganese battery, an alkaline battery, a mercury battery, and a silver oxide battery are not easily recharged electrically and, hence are discharged once and discarded. A secondary cell, such as a lead storage battery, a nickel-metal hydride battery using metal hydride as an active material for an anode, a closed nickel-cadmium battery, a lithium-metal battery, a lithium-ion battery, a lithium-polymer battery can be recharged electrically, after discharged , to their original condition. In addition to the batteries, a fuel battery and a solar battery are developed.

The disadvantages of a primary cell are low capacity, short lifetime, and contributing to environmental pollution by the disposal of non-reusable cells. On the other hand, the advantages of a secondary cell are efficiency, longer lifetime, a relatively higher voltage than a primary cell, and reusability thereby contributing less waste to the environment.

Among the secondary cells described above, a nickel cell is desirable in environmental aspects because of the most developed recycling technology and it increases the capacity of an electrode plate by means of increasing the packing amount per volume by packing active material paste in a multi-porous and alkali-resistant plate to provide a cell having a high capacity, and it is broadly used now.

Currently, nickel hydroxide is used as an active material for a cathode in a nickel cell and the reaction is as follows.

$$\beta\text{-Ni(OH)}_2 \leftrightarrow \beta\text{-NiOOH}$$

The oxidation number of nickel changes by one while the reversible reaction , and therefore theoretical capacity of nickel hydroxide is 289mAh/g.

But the oxidation number of nickel changes from +2.3 to +3.0~+3.7 in real reaction and it is possible that the capacity varies from 200~280mAh/g, that is, 70~140% of the theoretical value.

In spite of above-described possibility, a high oxidation number of nickel causes a decrease of a cell and electrode's lifetime, severe self-discharging, and low reversibility of reaction, and therefore the available capacity is known as 250~280mAh/g.

In a cathode of a nickel cell, the major reason for electrode inferiority is electrode's swelling that is, electrode's volume expansion that occurs during the transition to $\gamma$ form having a larger lattice size for hydrogen ions' transfer, that is to say, $\beta$-NiOOH changes to $\gamma$-NiOOH having a low density by overdischarging $\beta$ form having a higher density than $\alpha$ form. The electrode's swelling causes the loss of an active material, the decrease of conductivity, and severe decrease of an electrode's cycle life and efficiency.

The reason why the low density $\gamma$-NiOOH is formed is because a compact crystalline structure of a high density nickel hydroxide, that is, hydrogen ions cannot move efficiently in the reaction due to the small number of internal micropores. Therefore, it is desirable to prevent the formation of a low density $\gamma$-NiOOH to improve the property of an electrode.

To suppress the $\beta \rightarrow \gamma$ form transition, a new material, nickel-metal hydroxycarbonate is used that atoms such as cobalt, cadmium, zinc etc. are added to nickel hydroxide and these atoms substitute a part of nickel and therefore it sustains stable $\alpha$ form in strong alkaline solution. The method causes lattice deformation by atomic substitution and therefore can suppress the formation of $\gamma$-NiOOH as hydrogen ions move efficiently and overvoltage decreases in the charging-discharging cycle.

In addition to the method, a method to improve conductivity of an active material is broadly used that elevates the availability of the active material by using cobalt oxide forming efficient conductive matrix in strong alkaline solution or additives.

But the two methods have limits on increasing the capacity due to the fixation of an active material and a charging-discharging reaction device and therefore it is essential to change an active material itself to efficiently increase the capacity. Recently, an active material having a new structure-the active material has a high density and a globular shape-was developed by means that the content of trivalent metallic atoms, like cobalt and ferrous, is controlled. That is to say, the materials use a reversible reaction,

$$\alpha\text{-Ni(OH)}_2 \leftrightarrow \gamma\text{-NiOOH},$$

that has relatively small density differences for the charging-discharging cycle and more electrons transfer because of a large change of nickel's oxidation states during the reaction and therefore the method has high capacity theoretically, and in addition, prevents swelling of an electrode and thereby prolongs cycle life of the electrode.

But the tapping density of the powder used now is $1.4\text{g/cm}^3$ or less , it is tubular-shape, not globular-shape, control of the particle size's distribution is difficult , crystallization degree of it is 0.6 half width of (001) plane or less and it has an amorphous property.

Therefore, it is difficult that the material is made to have a high density and a globular-shape and that the electrode is made to have a high density and consequently, the capacity of the cell increase unsatisfactorily. It is difficult to obtain the best properties of the produced powder and theoretical value, $\sim375\text{mAh/g}$ or 130% of theoretical capacity of nickel hydroxide cannot be obtained.

The results are due to non-establishment of the charging-discharging characteristics and therefore an increase of a cell's capacity has limits without establishment of the charging-discharging characteristics.

## SUMMARY OF THE INVENTION

In order to solve the problems as described above, an object of this invention is to provide an active material for a cathode of a nickel cell and production method of a cathode thereof wherein the properties like shape, particle size, density, specific surface area of nickel-metal hydroxycarbonate powder used as the active material are controlled and thereby in overcharging of a cathode, swelling of an electrode is prevented and the efficiency of a charging-discharging cycle is improved and thereby a high capacity cell can be produced.

An embodiment of the present invention provides an active material for a cathode of a nickel cell having the formula, $\text{Ni}_{1-2x}\text{M}_{2x}(\text{OH})_2(\text{CO}_3)_x$ ($0<x\leq0.1$), wherein M is a trivalent metal, the average diameter of said active material is $2\sim30\mu\text{m}$, half width of XRD peak in (001) plane thereof is more than $1.0°/2\theta$, tapping density thereof is more than $1.6\text{g/cm}^3$, specific surface area thereof is $5\sim50\text{m}^2/\text{g}$, and the shape thereof is globular.

In the invention described above, M is selected from the group consisting of Al, Co, Fe, In, Mn and the mixtures thereof and the content of M is $10\sim25\%$ by mole of the total mole of the active materials.

An embodiment of the present invention also provides a method for producing a cathode of a nickel cell, the method which comprises the steps of producing paste by mixing the active material, a viscosity- increasing agent, and a conductive agent, spreading the paste on a metallic supporter; and drying and pressing the metallic supporter.

In the method described above, the conductive agent is selected from the group consisting of Co,CoO, and $\text{Co(OH)}_2$ and the content of the conductive agent is $6\sim18\%$ by weight of the total weight of the active materials.

## BRIEF DESCRIPTION OF THE DRAWINGS

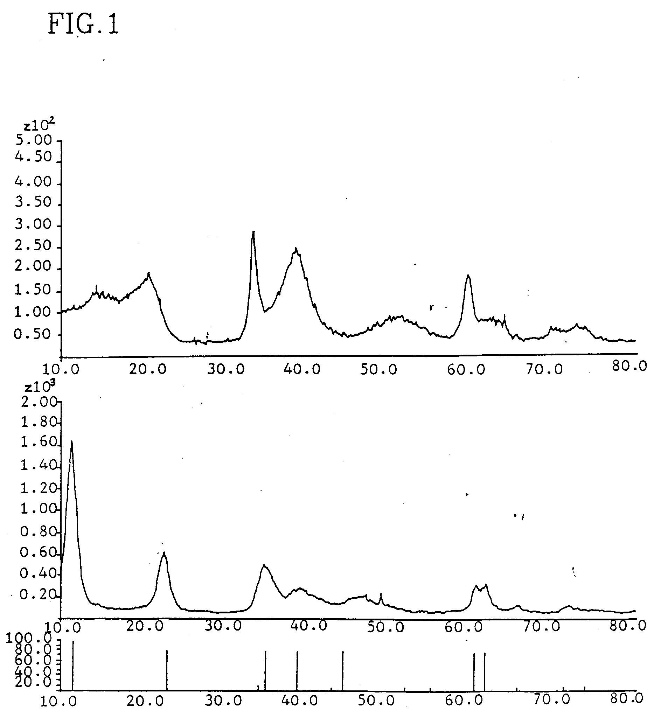

FIG. 1 is a graph showing a XRD pattern of the powder substituted $\text{Al}^{+3}$ as an active material for a cathode of the nickel cell produced by the method presented in this invention.

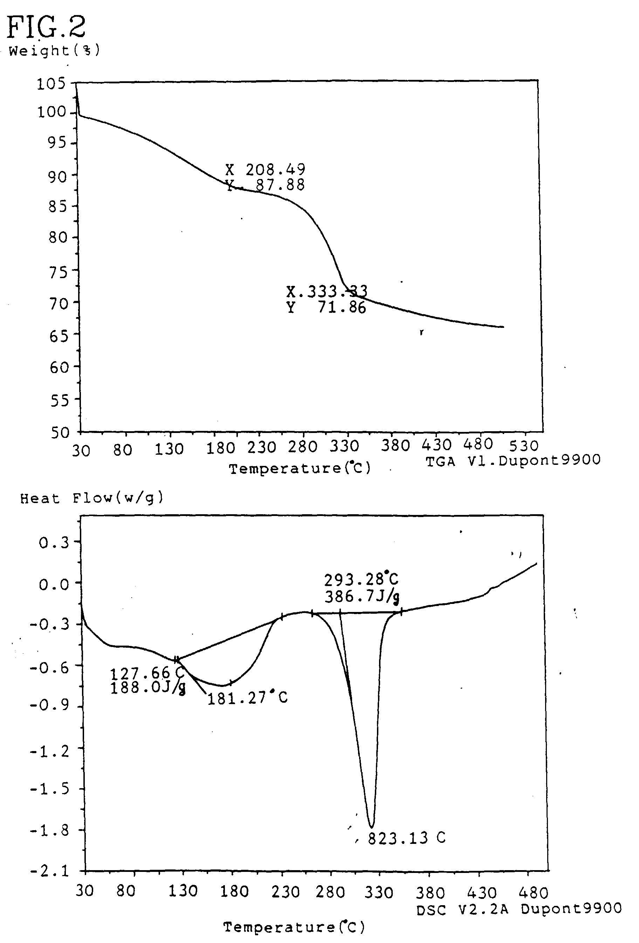

FIG. 2 is a graph showing TG-DSC analysis results of the powder substituted $\text{Al}^{+3}$ 20% by mole of the mole of an active material as the active material for a cathode of a nickel cell produced by the method presented in this invention.

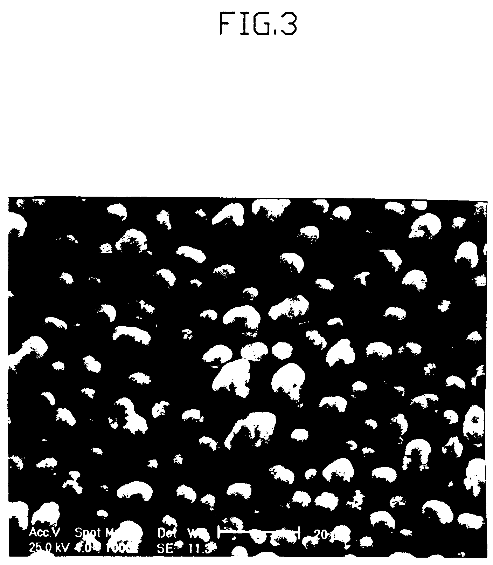

FIG. 3 is a SEM picture of the powder substituted $\text{Al}^{+3}$ 20% by mole of the mole of an active material as the active material for a cathode of a nickel cell produced by the method presented in this invention.

## DETAILED DESCRIPTION OF THE PREFERRED EMBODIMENTS

The present invention is further explained in more detail with reference to the following examples which do not limit this invention.

EXAMPLE 1~3

2.5% by mole Nickel sulfate solution and 15.3 % by mole ammonia solution were mixed previously in a mixing container with the molar ratio of nickel to ammonia of 1 to 0.6 and thereafter the mixed solution was provided directly and continuously in a reaction container.

$Al_2(SO_4)_3$ solution containing $Al^{+3}$ ions and NaOH solution were provided as a precipitation agent in the reaction container. The solutions were provided using constant-velocity circulatory pumps and one of them was connected to a pH controller. The reaction container was a 5/ beaker excreting continuously and was agitated at 900 RPM by a DC motor. For sufficient agitation of the solution and efficient excretion of precipitates, two impellers and a tubular-type baffle were equipped and a disc-type baffle was equipped in the upper zone. The reaction container was maintained at a constant temperature using a thermostat and was equipped with the pH electrode in the middle zone to control the pH and the providing velocity of the precipitation agent was automatically adjusted and thereby a constant pH was maintained.

Excreted solution was filtered in a suction filter and therein was sufficiently washed with distilled water to prevent precipitation. The solution was provided with a FMI piston pump and a 3~180 RPM constant-velocity motor and providing velocity of it was controlled within the range of 3.0m/ aberration or less per hour.

The produced nickel-metal hydroxycarbonate powder was differentiated by particle size by sieving in 200, 325, 400 mesh (75, 46, 32μm) and sample A, in example 1, was 46~75 μm, sample B, in example 2, was 32~46 μm, and sample C, in example 3, was less than 32μm of size. Thereafter properties were analyzed by shape, size distribution, tapping density, thermal analysis, and form analysis of a particle and the results are shown in table 1 below.

Table 1

| properties and charging-discharging characteristics with particle size after 10 cycles | | | |
|---|---|---|---|
| | example 1 | example 2 | example 3 |
| particle size[μm] | 46~75 | 32~46 | <32 |
| average particle size[μm] | 54 | 38 | 12 |
| specific surface area[$m^2$/g] | 15 | 23 | 36 |
| tapping density[g/$m^2$] | 1.84 | 1.98 | 2.13 |
| half width[001] | 2.3 | 2.3 | 2.3 |
| CoO content[%] | 12 | 12 | 12 |
| packing density[g/$m^3$] | 1.65 | 1.73 | 1.96 |
| availability[%] | 108 | 112 | 123 |
| capacity[mAh/g] | 312 | 324 | 355 |

EXAMPLE 4~6

Active materials, sample A produced by the method presented example described above, carboxyl methyl cellulose and polytetrafluoro ethylene as a viscosity-increasing agent, and CoO, as a conductive agent, were added to produce paste and therein the respective amount was varied as shown in table 2.

The paste was packed in a nickel-foam plate, cathode and was dried and the nickel-foam plate was fixed by pressing both sides with acrylic plates using two metal hydride anodes as conjugate electrodes.

Successively, the respective electrode was wholly separated by a separator. Electrolytic solution was injected and the separator was soaked in the electrolytic solution but the electrode was prevented from being soaked directly in an electrolytic solution and thereby a cell was produced.

EXAMPLE 7~9

Example 4~6 were repeated except that the active material , sample B was used.

EXAMPLE 10~12

Example 4~6 were repeated except that the active material, sample C was used.

The efficiency of the conductive agent as the content of it was measured and the results are shown in table 2 below.

Table 2

| sample | example | CoO content [weight%] | 10 cycles (availability%) | 30 cycles (availability%) | 50 cycles (availability%) |
|---|---|---|---|---|---|
| A | example 4 | 6 | 101 | 100 | 102 |
| | example 5 | 12 | 108 | 107 | 108 |
| | example 6 | 18 | 103 | 103 | 102 |
| B | example 7 | 6 | 102 | 102 | 103 |
| | example 8 | 12 | 112 | 112 | 112 |
| | example 9 | 18 | 104 | 105 | 1-4 |
| C | example 10 | 6 | 114 | 113 | 115 |
| | example 11 | 12 | 123 | 121 | 122 |
| | example 12 | 18 | 112 | 110 | 111 |

The property analysis was mainly carried on the powder substituted $Al^{+3}$ and the powder substituted Co, Fe, Ga, In, and Mn etc. showed a globular-shape with the amount of 10% or more by mole of the mole of nickel and showed nickel hydroxide $\beta$ form with the amount of less than 10% by mole of the total mole of the active materials.

The XRD analysis results of the powder substituted 20% by mole of $Al^{+3}$ are shown in drawing 1 and its TG-DSC results are shown in drawing 2. The shape of the powder substituted $Al^{+3}$ is shown in drawing 3 as a representative and the shape of the powders is similar regardless of substituted trivalent metallic atoms. In the powder substituted $Al^{+3}$, tapping density and the availability of an active material vary with particle size and even in the same particle size , vary with the content of conductive agent.

Tapping density and the availability of an active material with particle size have been shown in the above table 1 and the availability of active materials with the content of conductive agent is shown in the above table 2.

The results shows that the smaller the particle, the greater the availability of an active material and that an active material is less swelled than in the prior nickel hydroxide. The availability of an active material increases to the content of the conductive agent of 12% by weight of the weight of the total active materials and then decreases again.

As described above, the active material produced by the method presented in this invention has the availability which are increased by a maximum of 23% and the capacity of the cell increases from 289mAh/g to 355mAh/g as compared with nickel hydroxide, as an active material. Also, in the charging-discharging characteristics, a capacity does not change in a high-rate charging-discharging cycle of 1C charging compared with in 0.2C charging and therefore a high-rate charging is possible.

Also in the cycle life, as active materials are not lost in the electrode plate experiment, the electrode plate shows effective capacity even after more than 100 cycles and therefore compared with more or less than 50 cycles in the prior electrode plate using nickel hydroxide, the cycle life of the electrode is improved by more than two times.

## Claims

1. An Active material for a cathode of a nickel cell ,having the formula, $Ni_{1-2x}M_{2x}(OH)_2(CO_3)_x$ $(0<x\leq0.1)$:
   
   wherein said M is a trivalent metal, the average diameter of said active material is 2~30$\mu$m, half width of XRD peak in (001) plane thereof is more than 1.0°/2θ, tapping density thereof is more than 1.6g/cm$^3$, specific surface area thereof is 5~50m$^2$/g, and the shape thereof is globular.

2. The active material according to claim 1, wherein M is selected from the group consisting of Al, Co, Fe, In, Mn and the mixtures thereof.

3. The active material according to claim 1, wherein the content of said M is 10~25% by mole of the total mole of the active materials.

4. A method for producing a cathode of a nickel cell, the method which comprises the steps of:

   (a) producing paste by mixing the active material described in claim 1, a viscosity- increasing agent, and a conductive agent;

(b) spreading said paste on a metallic supporter; and

(c) drying and pressing said metallic supporter.

5. The method according to claim 4, wherein said conductive agent is selected from the group consisting of Co,CoO, and $Co(OH)_2$ and the content of said conductive agent is 6~18 % by weight of the weight of the total active materials.

EP 0 848 438 A1

FIG.1

7

# FIG.2

Weight(%)

X 208.49
Y 87.88

X.333.33
Y 71.86

Temperature(°C)    TGA V1.Dupont9900

Heat Flow(w/g)

293.28°C
386.7J/g

127.66 C
188.0J/g
181.27°C

823.13 C

Temperature(°C)

DSC V2.2A Dupont9900

# FIG.3

**European Patent Office**

**EUROPEAN SEARCH REPORT**

Application Number

EP 97 11 4699

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 714 144 A (SUMITOMO CHEMICAL CO)<br>* claims 1-9; example 1 * | 1 | H01M4/52 |
| P,X | DE 196 35 247 A (SAMSUNG DISPLAY DEVICES CO LTD)<br>* the whole document * | 1 | |
| A | EP 0 390 677 A (CENTRE NAT ETD SPATIALES)<br>* claims 1-20 * | 1-5 | |
| A | EP 0 646 546 A (FUJI CHEM IND CO LTD)<br>* claims 1-5 * | 1-5 | |
| A | EP 0 092 656 A (WESTINGHOUSE ELECTRIC CORP)<br>* claims 1-11 * | 1-5 | |

TECHNICAL FIELDS
SEARCHED (Int.Cl.6)

H01M

The present search report has been drawn up for all claims

| Place of search | Date of completion of the search | Examiner |
|---|---|---|
| THE HAGUE | 24 March 1998 | Battistig, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)